# NEUE EUROPÄISCHE PATENTSCHRIFT

(11) **EP 1 254 328 B2**
(45) Veröffentlichungstag und Bekanntmachung des Hinweises auf die Entscheidung über den Einspruch: **31.05.2006**
(45) Hinweis auf die Patenterteilung: 14.05.2003
(21) Anmeldenummer: 01909707.0
(22) Anmeldetag: 30.01.2001
(51) Int. Cl.: F16H 61/00, F16D 25/12, B60W 10/10, F16D 48/02

(54) **GETRIEBE MIT ZENTRALER KUPPLUNGSAUSRÜCKUNG**
GEARBOX WITH CENTRAL CLUTCH RELEASE
BOITE DE VITESSES A DEBRAYAGE CENTRALISE

(30) Priorität: 04.02.2000 DE 10005086
(43) Veröffentlichungstag der Anmeldung: 06.11.2002
(73) Patentinhaber: ZF FRIEDRICHSHAFEN Aktiengesellschaft, 88038 Friedrichshafen (DE)
(72) Erfinder: HÄRDTLE, Wilhelm, 88677 Markdorf (DE)
(86) Internationale Anmeldenummer: PCT/EP2001/000966
(87) Internationale Veröffentlichungsnummer: WO 2001/057419

(56) Entgegenhaltungen:
- DE-A- 19 627 980
- DE-A- 19 716 600
- DE-A- 19 729 096
- DE-A- 19 735 759
- DE-A- 19 815 666
- DE-A- 19 826 068
- DE-C- 4 120 540
- DE-U- 9 307 228
- US-A- 4 271 728

## Beschreibung

Die Erfindung betrifft ein Getriebe mit einer zentralen Kupplungsausrückung nach dem Oberbegriff des Anspruchs 1.

Die Kupplungsausrückung von Getrieben kann über extern an der Kupplungsglocke angeordnete Kupplungssteller oder durch auf der Eingangswelle des Getriebes angeordnete zentrale Kupplungsausrückeinrichtungen vollzogen werden. Bei der letztgenannten Variante entfällt der übersetzende Hebel, der zwischen der Kupplung und dem Kupplungssteller vorgesehen ist. Der Hebel schafft eine Kraftverstärkung der vom Kupplungssteller erzeugten Kraft zu der an der Kupplung benötigten Kraft, um die Kupplungsscheibe von der Schwungscheibe zwischen Antriebsmaschine und Getriebe zu lösen.

Aus der Europäischen Patentschrift EP 0 371 975 ist eine Kupplungsausrückung bekannt geworden, in der in einem dezentralen Kupplungssteller ein Betätigungszylinder, Magnetventile und eine Wegmesseinrichtung vorgesehen sind. Die Kupplungsausrückung weist nur einen außenliegenden Anschluß für das Betätigungsmedium und einen außenliegenden Anschluß für elektrische Leitungen auf. Bei dieser Kupplungsausrückung müssen sowohl eine zusätzliche Leitung zur Steuereinrichtung der Kupplung wie auch eine zusätzliche Leitung zur Versorgung mit dem Betätigungsmedium vorgesehen sein. Ebenfalls ist die Hebelmechanik zwischen Kupplungssteller und Kupplung notwendig.

In der gattungsbildenden Deutschen Anmeldung DE 198 26 068 A ist eine zentrale Kupplungsausrückung beschrieben, in der zentral um die Eingangswelle des Getriebes ein Betätigungszylinder für das Betätigungsmedium und eine Wegmesseinrichtung angeordnet sind. Die Ventile sind außerhalb des Getriebes angeordnet und müssen über eine entsprechende Leitung mit dem Betätigungszylinder verbunden werden. Ebenfalls muß eine elektrische Leitung für die Verbindung zwischen Wegmesseinrichtung und einer Kupplungssteuerung vorgesehen sein.

Aus der Europäischen Patentschrift EP 0 824 644 ist eine Getriebesteuerung für Fahrzeuggetriebe bekannt, die an oder in dem Getriebe angeordnet ist und mit Stellgliedern der Schalteinrichtungen für das Getriebe zusammenwirkt. Die Getriebesteuerung weist sowohl mechanische als auch elektronische Elemente auf. Die Getriebesteuerung wirkt mit einer Kupplungsausrückung oder Kupplungsteuerung nicht zusammen.

Ausgehend vom Stand der Technik liegt der Erfindung die Aufgabe zugrunde, eine zentral wirkende Kupplungsausrückung für ein Getriebe vorzuschlagen, die bestehende Nachteile beseitigt, und, insbesondere, platzsparend und modular gebaut werden kann.

Die Aufgabe wird gelöst durch eine Kupplungsausrückung mit den Merkmalen des Anspruchs 1. Ausgestaltungen sind Gegenstand von Unteransprüchen.

Erfindungsgemäß wird eine zentral wirkende Vorrichtung zur Ausrückung der Kupplung vorgeschlagen, die zwischen der Kupplungsscheibe und der Kupplungsglocke derart angeordnet ist, daß die Verbindungsleitung für das Betätigungsmedium und die elektrische Verbindungsleitung für die Kupplungssteuerung mit der Getriebesteuerung direkt verbindbar ist. Das Medium zur Betätigung der Kupplung ist unmittelbar aus der Getriebesteuerung entnommen. Vorzugsweise ist das Medium Luft, weil in Nutzfahrzeugen Luft als Betriebsmedium beispielsweise für die Bremsen zur Verfügung steht.

Der Außendurchmesser der Vorrichtung zur Ausrückung der Kupplung reicht bis an die Getriebesteuerung heran. Eine Ausführungsform weist Steckverbindungen an der Vorrichtung zur Ausrückung der Kupplung und an der Getriebesteuerung auf, die unmittelbar miteinander verbindbar sind. In einer vorteilhaften Ausgestaltungsform ist in der Vorrichtung zur Ausrückung der Kupplung die Steuerung der Kupplung integriert und in einer Ausgestaltung sind auch die Magnetventile zur Ansteuerung der Ausrückung der Kupplung In der Vorrichtung zur Ausrückung der Kupplung vorgesehen. Eine weitere Ausgestaltungsform zeigt die Steuerung der Kupplung integriert in der Getriebesteuerung, wobei in einer Form auch die Magnetventile zur Ansteuerung der Ausrükkung der Kupplung in der Getriebesteuerung vorgesehen sind.

Durch die Anordnung der Vorrichtung zur Ausrückung der Kupplung in direkter Verbindung zur Getriebesteuerung ist nur ein Anschluß für das Betätigungsmedium von Getriebesteuerung und Kupplung notwendig, der direkt an der Getriebesteuerung vorgesehen werden kann. Ebenso ist nur ein Stecker an der Getriebesteuerung vorzusehen, über den sowohl die Getriebesteuerung als auch die Kupplungssteuerung erreichbar sind und beispielsweise auf einen gemeinsamen BUS, beispielsweise einen CAN-BUS, zugreifen können. Die innerhalb der Kupplungsglocke angeordnete Vorrichtung zur Ausrückung der Kupplung spart den Platz für die entsprechende bisherige Anordnung außen am Getriebe, die nun anderen Verwendungen zur Verfügung stehen kann oder dem Fahrzeugkonstrukteur mehr Gestaltungsfreiheiten läßt. Einfache lösbare Anbindungen durch Steckverbindungen lassen einen modularen Aufbau von mechanischem Getriebeteil, Kupplungsausrückung und Getriebesteuerung zu. Die kurzen Verbindungen zwischen der Getriebesteuerung und der Vorrichtung zur Ausrückung der Kupplung erlauben eine hohe Dynamik bei der Ansteuerung der Kupplung. Die beschriebene Vorrichtung eignet sich sowohl für eine gedrückte wie auch eine gezogene Trennkupplung. Die Kupplung ist dabei vorzugsweise eine Trockenkupplung, jedoch ist bei einer entsprechenden Abdichtung die Anwendung auch für eine nasse Kupplung möglich.

Die Erfindung wird anhand einer Zeichnung näher erläutert.
Es zeigen:
- Fig. 1: eine Anordnung nach dem Stand der Technik und
- Fig. 2: eine erfindungsgemäße Anordnung.

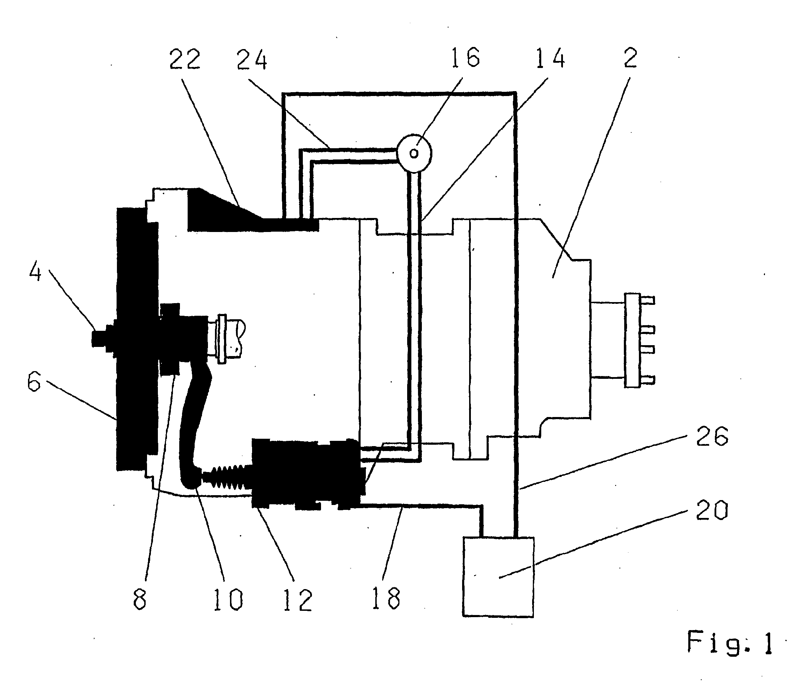

Die Fig. 1 zeigt ein Getriebe 2 für ein hier nicht dargestelltes Fahrzeug. Auf der Eingangswelle 4 des Getriebes 2 ist eine Kupplung 6 angeordnet, die von einem auf der Eingangswelle 4 angeordneten Ausrücklager 8 in einen geöffneten und einen geschlossenen Zustand mit der Schwungscheibe einer hier nicht gezeigten Antriebsmaschine des Fahrzeugs gebracht werden kann. An das Ausrücklager 8 greift ein Hebel 10 an, der von einem Kupplungssteller 12 betätigt wird. An dem Kupplungssteller 12 ist eine Verbindungsleitung 14 vorgesehen, die den Kupplungssteller 12 mit einem Speicher 16 für das Betätigungsmedium der Kupplung verbindet, Eine elektrische Verbindungsleitung 18 schließt den Kupplungssteller 12 an eine elektronische Steuereinrichtung 20 an. Diese Steuereinrichtung 20 kann auch der Leitrechner des Fahrzeugs sein. In dem Getriebe 20 ist eine Getriebesteuerung 22 angeordnet, die über eine Leitung 24 ebenfalls mit dem Speicher 16 verbunden ist und die über eine Leitung 26 an die Steuereinrichtung 20 angeschlossen ist.

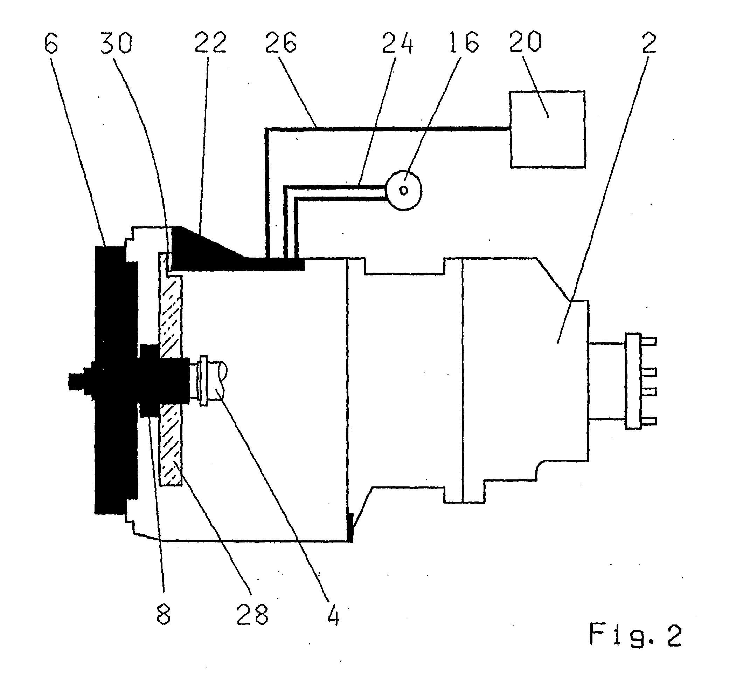

Die Fig. 2 zeigt ein Getriebe 2 für ein hier ebenfalls nicht dargestelltes Fahrzeug.. Auf der Eingangswelle 4 des Getriebes 2 ist die Kupplung 6 angeordnet, die von dem auf der Eingangswelle 4 angeordneten Ausrücklager 8 in einen geöffneten und einen geschlossenen Zustand gebracht werden kann. Auf das Ausrücklager 8 wirkt eine Vorrichtung zum Ausrücken der Kupplung 28 ein, die um die Eingangswelle herum abgeordnet ist. An ihrem äußeren Umfang weist die Vorrichtung 28 Steckverbindungen 30 auf, durch die die Vorrichtung 28 und die Getriebesteuerung 22 miteinander verbunden sind. Die Steckverbindungen können für das Betätigungsmedium abgedichtete Stecker und Kupplungen sein, wie sie für Schlauchleitungen aus der Pneumatik allgemein bekannt sind. Die Steckverbindung für die elektrische Übertragung besteht vorzugsweise aus einem runden, mehrpoligen Stecker, dessen Hälften zur Sicherung miteinander verschraubt werden können. Über die Steckverbindungen erhält die Vorrichtung 28 die notwendigen elektrischen Signale und das Hilfsmedium zur Betätigung und zur Ausrückung der Kupplung.

### Bezugszeichen

- 2: Getriebe
- 4: Eingangswelle
- 6: Kupplung
- 8: Ausrücklager
- 10: Hebel
- 12: Kupplungssteller
- 14: Verbindungsleitung
- 16: Speicher
- 18: Verbindungsleitung
- 20: Steuereinrichtung
- 22: Getriebesteuerung
- 24: Leitung
- 26: Leitung
- 28: Vorrichtung
- 30: Steckverbindung

## Patentansprüche

1. Fahrzeuggetriebe (2) mit einer zentral wirkenden Vorrichtung (28) zur Ausrückung der Kupplung (6), die zwischen der Kupplungsscheibe und der Kupplungsglocke des Getriebes (2) vorgesehen und elektrisch unmittelbar mit einer Getriebesteuerung (22) verbunden ist, wobei die Kupplung (6) nicht elektrisch betätigt ist und das Medium zur Betätigung der Kupplung (6) unmittelbar aus der Getriebesteuerung (22) entnommen ist **dadurch gekennzeichnet, dass** die Getriebesteuerung (22) an oder in dem Getriebe (2) vorgesehen ist und der Außendurchmesser der Vorrichtung (28) bis an die Getriebesteuerung (22) heranreicht.

2. Fahrzeuggetriebe (2) mit einer zentral wirkenden Vorrichtung (28) zur Ausrückung der Kupplung (6) nach Anspruch 1, **dadurch gekennzeichnet, dass** Steckverbindungen (30) an der Vorrichtung (28) und an der Getriebesteuerung (22) vorgesehen sind, die unmittelbar miteinander verbindbar sind.

3. Fahrzeuggetriebe (2) mit einer zentral wirkenden Vorrichtung (28) zur Ausrückung der Kupplung (6) nach einem der Ansprüche 1 bis 2, **dadurch gekennzeichnet, dass** in der Vorrichtung (28) die Steuerung der Kupplung (6) integriert ist.

4. Fahrzeuggetriebe (2) mit einer zentral wirkenden Vorrichtung (28) zur Ausrückung der Kupplung (6) nach einem der Ansprüche 1 bis 3, **dadurch gekennzeichnet, dass** in der Vorrichtung (28) Magnetventile zur Ansteuerung der Ausrückung der Kupplung (6) vorgesehen sind.

5. Fahrzeuggetriebe (2) mit einer zentral wirkenden Vorrichtung (28) zur Ausrückung der Kupplung (6) nach einem der Ansprüche 1 bis 2, **dadurch gekennzeichnet, dass** in der Getriebesteuerung (22) die Steuerung der Vorrichtung (28) integriert ist.

6. Fahrzeuggetriebe (2) mit einer zentral wirkenden Vorrichtung (28) zur Ausrückung der Kupplung (6) nach einem der Ansprüche 1 bis 3 oder 5, **dadurch gekennzeichnet, dass** in der Getriebesteuerung (22) Magnetventile zur Ansteuerung der Vorrichtung (28) vorgesehen sind.

7. Fahrzeuggetriebe (2) mit einer zentral wirkenden Vorrichtung (28) zur Ausrückung der Kupplung (6) nach einem der vorherigen Ansprüche, **dadurch gekennzeichnet, dass** das Betätigungsmedium Luft.ist.

## Claims

1. A vehicle transmission (2) with a centrally-acting device (28) for releasing the clutch (6), which is arranged between the clutch disk and the clutch bell of the transmission (2) and which is electrically linked to a transmission control (22), with the clutch (6) not being electrically actuated and the medium for the actuation of the clutch (6) being taken from the transmission control (22), **characterized in that** the transmission control (22) is arranged on or in the transmission (2) and that the outer diameter of the device (28) extends to the transmission control (22).

2. A vehicle transmission (2) with a centrally-acting device (28) for releasing the clutch (6) according to claim 1, **characterized in that** plug-in connections (30) are arranged on the device (28) and on the transmission control (22), which can be connected to each other.

3. A vehicle transmission (2) with a centrally-acting device (28) for releasing the clutch (6) according to one of the claims 1 and 2, **characterized in that** the control of the clutch (6) is integrated in the device (28).

4. A vehicle transmission (2) with a centrally-acting device (28) for releasing the clutch (6) according to one of the claims 1 through 3, **characterized in that** solenoid valves for controlling the release of the dutch (6) are arranged in the device (28).

5. A vehicle transmission (2) with a centrally-acting device (28) for releasing the clutch (6) according to one of the claims 1 or 2, **characterized in that** the control of the device (28) is integrated in the transmission control (22).

6. A vehicle transmission (2) with a centrally-acting device (28) for releasing the clutch (6) according to one of the claims 1 through 3 or 5, **characterized in that** solenoid valves for controlling the device (28) are arranged in the transmission control (22).

7. A vehicle transmission (2) with a centrally-acting device (28) for releasing the clutch (6) according to one of the preceding claims, **characterized in that** the actuating medium is air.

## Revendications

1. Boîte de vitesses d'un véhicule (2) dotée d'un dispositif central (28) permettant l'actionnement de l'embrayage (6), ce dispositif étant prévu entre le disque d'embrayage et la cloche d'embrayage de la boîte de vitesses (2) et étant lié par voie électrique directement au boîtier de commande de la boîte de vitesses (22), sachant que l'embrayage (6) n'est pas actionné par voie électrique et que le fluide de commande de l'embrayage (6) est prélevé directement du boîtier de commande de la boîte de vitesses (22), **caractérisée en ce que** le boîtier de commande de la boîte de vitesses (22) est prévu sur ou dans la boîte de vitesses (2) et **en ce que** le diamètre extérieur du dispositif (28) arrive jusqu'au boîtier de commande de la boîte de vitesses (22).

2. Boîte de vitesses d'un véhicule (2) dotée d'un dispositif central (28) permettant l'actionnement de l'embrayage (6) selon la revendication 1, **caractérisée en ce que** sur le dispositif (28) et sur le boîtier de commande de la boîte de vitesses (22) sont prévus des connecteurs (30), qui peuvent être directement connectés l'un à l'autre.

3. Boîte de vitesses d'un véhicule (2) dotée d'un dispositif central (28) permettant l'actionnement de l'embrayage (6) selon une des revendications 1 à 2, **caractérisée en ce que** l'unité de commande de l'embrayage (6) est intégrée dans le dispositif (28).

4. Boîte de vitesses d'un véhicule (2) dotée d'un dispositif central (28) permettant l'actionnement de l'embrayage (6) selon une des revendications 1 à 3, **caractérisée en ce que** dans le dispositif (28) sont prévues des électrovannes pour piloter l'actionnement de l'embrayage (6).

5. Boîte de vitesses d'un véhicule (2) dotée d'un dispositif central (28) permettant l'actionnement de l'embrayage (6) selon une des revendications 1 à 2, **caractérisée en ce que** la commande du dispositif (28) est intégrée dans l'unité de commande de l'embrayage (6).

6. Boîte de vitesses d'un véhicule (2) dotée d'un dispositif central (28) permettant l'actionnement de l'embrayage (6) selon une des revendications 1 à 3 ou à 5, **caractérisée en ce que** dans l'unité de commande de la boîte de vitesses (22) sont prévues des électrovannes pour piloter le dispositif (28).

7. Boîte de vitesses d'un véhicule (2) dotée d'un dispositif central (28) permettant l'actionnement de l'embrayage (6) selon une des revendications précédentes, **caractérisée en ce que** le fluide de commande est de l'air.
